Europäisches Patentamt

European Patent Office

Office européen des brevets

(19)

(11) Publication number: **0 226 873 B1**

## EUROPEAN PATENT SPECIFICATION

(12)

(45) Date of publication of patent specification: **20.02.91**  (51) Int. Cl.⁵: **B60H 1/00**, F02N 17/02

(21) Application number: **86116585.0**

(22) Date of filing: **28.11.86**

(54) Apparatus for preheating the engine and air-conditioning the crew compartment of a tank.

(30) Priority: **20.12.85 IT 6809485**

(43) Date of publication of application:
**01.07.87 Bulletin 87/27**

(45) Publication of the grant of the patent:
**20.02.91 Bulletin 91/08**

(84) Designated Contracting States:
**DE ES FR GB GR**

(56) References cited:
**DE-A- 2 044 958**   **DE-A- 3 341 023**
**FR-A- 2 116 114**   **FR-A- 2 263 903**
**FR-A- 2 342 863**   **US-A- 2 726 042**
**US-A- 2 895 678**   **US-A- 3 990 505**
**US-A- 4 099 488**

(73) Proprietor: **IVECO FIAT S.p.A.**
**Via Puglia 35**
**I-10156 Torino(IT)**

(72) Inventor: **Unger, Alfredo**
**Regione Cates, 50**
**I-10074 Lanzo Torinese(IT)**

(74) Representative: **Prato, Roberto et al**
**STUDIO TORTA Società Semplice Via Viotti 9**
**I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an apparatus for heating the engine and air-conditioning the crew compartment of track-laying or wheeled vehicles for civil and military use. As such vehicles are required to be used in any zone of operation, they have to be able to operate efficiently in very cold climates and also in very hot climates.

It is well known that in very cold climates the power unit can be difficult to start because of the reduction in battery voltage, increase in lubricant viscosity and paraffin formation in the diesel oil. In contrast, in hot climates, beyond certain temperature limits the electronic equipment on board is unable to effectively perform its task, with obvious serious consequences for the vehicle offensive and defensive systems.

Moreover, in both cases the vehicle crew compartment requires suitable air-conditioning in order to maintain suitable temperature and humidity conditions in it for the proper physiological well-being of the crew.

Air-conditioning systems, particularly for vehicles, are well known; in particular US-A 3 990 505 discloses a system comprising two closed-loop hydraulic circuits using the same hydraulic fluid with a common circuit portion and a change-over valve operable from a first to a second position to enable said fluid to be heated or cooled selectively. This system is apt to be used with vehicles whose only passenger compartment has to be cooled or heated; besides this system does not exhibit the feature of automatically transmit heating or refrigeration power when predetermined temperatures are reached.

An object of the present invention is to provide an apparatus which, when the temperature in the zone of operation is below a predetermined value, is able to automatically heat the engine cooling water, the fuel, the batteries and the vehicle crew compartment, and which when the temperature in the zone of operation exceeds another predetermined value is able to transmit refrigeration power to the crew compartment in order to suitably air-condition it.

A further object of the present invention is to provide an apparatus of the indicated type by means of which the thermal power and refrigeration power are transmitted automatically to the interior of the crew compartment by a single low-pressure inert fluid.

With respect to US-A-3990505 which discloses an apparatus for heating the engine and air-conditioning the crew compartment of a track-laying or wheeled vehicle, comprising:
a first closed-loop hydraulic circuit for circulating a low-pressure inert hydraulic fluid, said first circuit transmissing thermal power and having connected into it a boiler for heating said fluid, a first beat exchanger for heating the engine cooling water, a second heat exchanger for heating the engine fuel and a third heat exchanger for heating the batteries, and possibly a unit heater for heating the crew compartment;
a second closed-loop hydraulic circuit for circulating said hydraulic fluid, said second circuit transmissing refrigeration power and having connected into it a fourth heat exchanger cooled by a refrigeration device and arranged to cool said fluid, and a fifth heat exchanger arranged to transmit thermal power or refrigeration power to the crew compartment of the track-laying or wheeled vehicle; said first and second circuits having in common two circuit portions which can be connected together by a first portion of said second circuit into which said fourth heat exchanger cooled by a refrigeration device is connected, and by means of a second portion of said first circuit; the present invention is characterised by at least a first and a second three-way change-over valve, which are connected into said circuits and are able to be switched from a first position in which they establish hydraulic communication within said first circuit to enable said fluid heated by said boiler to be circulated through it, and in which they interrupt hydraulic communication within said second circuit, to a second position in which said valves interrupt hydraulic communication within said first circuit and establish hydraulic communication within said second circuit to enable said fluid cooled by said refrigeration device to be circulated within it, said apparatus being able, by the manual operation of said first valve, and the automatic operation of said second valve, to be set into a first configuration in which both the valves are switched to said first positions such that hot fluid is circulated only within said first circuit in order to heat the cooling water, the fuel and the batteries, a second configuration in which said first valve is switched to said first position and said second valve is switched to said second position in such a manner that said hot fluid is also circulated within part of said second circuit and thus within said crew compartment, and a third configuration in which said first valve and second valve are both switched to said second positions so that only said cold fluid circulates within said second circuit in order to cool said crew compartment.

The present invention will be more apparent from the detailed description thereof given hereinafter by way of example with reference to the accompanying drawings, in which:

Figure 1 is a diagrammatic representation of the apparatus according to the invention, in which the various components are arranged for heating the batteries, the engine cooling water and the fuel;

Figure 2 is a representation of the apparatus in which said components are arranged for heating only the engine water and the fuel;

Figure 3 is a representation of the apparatus in which the various components are arranged for heating the batteries, engine cooling water, fuel and vehicle crew compartment to predetermined temperatures:

Figure 4 is a diagrammatic representation of the apparatus according to the invention in which the various components are arrranged to maintain the batteries, engine cooling water, fuel and vehicle crew compartment at predetermined temperatures by withdrawing thermal energy from the vehicle engine;

Figure 5 is a representation of the apparatus according to the invention in which the various components are arranged to transmit refrigeration power to the vehicle crew compartment.

The apparatus according to the invention comprises substantially a first closed-loop hydraulic circuit comprising substantially the portions 1, 2a, 2b, 2c, 2d, 4, 5, 6 and 7. Said circuit is to be traversed by a low-pressure inert hydraulic fluid, conveniently consisting of an aqueous' solution of ethylene glycol, and there are connected into the circuit a boiler 8 for heating said fluid, a first heat exchanger 9 for heating the engine cooling water, a second heat exchanger 10 for heating the fuel and a third heat exchanger 11 for heating the batteries, and possibly one or more unit heaters 22 for heating the crew compartment.

As can be clearly seen from the figures, the first heat exchanger 9 is connected into the circuit portion 6, and the heat exchanger 11 is connected into the circuit portion 5, which is substantially parallel to the preceding.

A second closed-loop hydraulic circuit comprises substantially the portions 13, 2b, 14, 15, 16 and 2d, this circuit thus having the portions 2b and 2d in common with the aforesaid first circuit. There is connected into the portion 13 a fourth heat exchanger 17, cooled by a refrigeration device indicated overall by 18. This device, which can be of any suitable type, comprises conveniently a freon compressor 19, a freon condenser 20 and an expansion valve 21. A fifth heat exchanger 22 for transmitting refrigeration power to the tank crew compartment 23 is connected into the portion 14 of the second circuit. This crew compartment is separated from the engine compartment by a suitable bulkhead 24. The heat exchanger 22 conveniently comprises a pair of unit heaters.

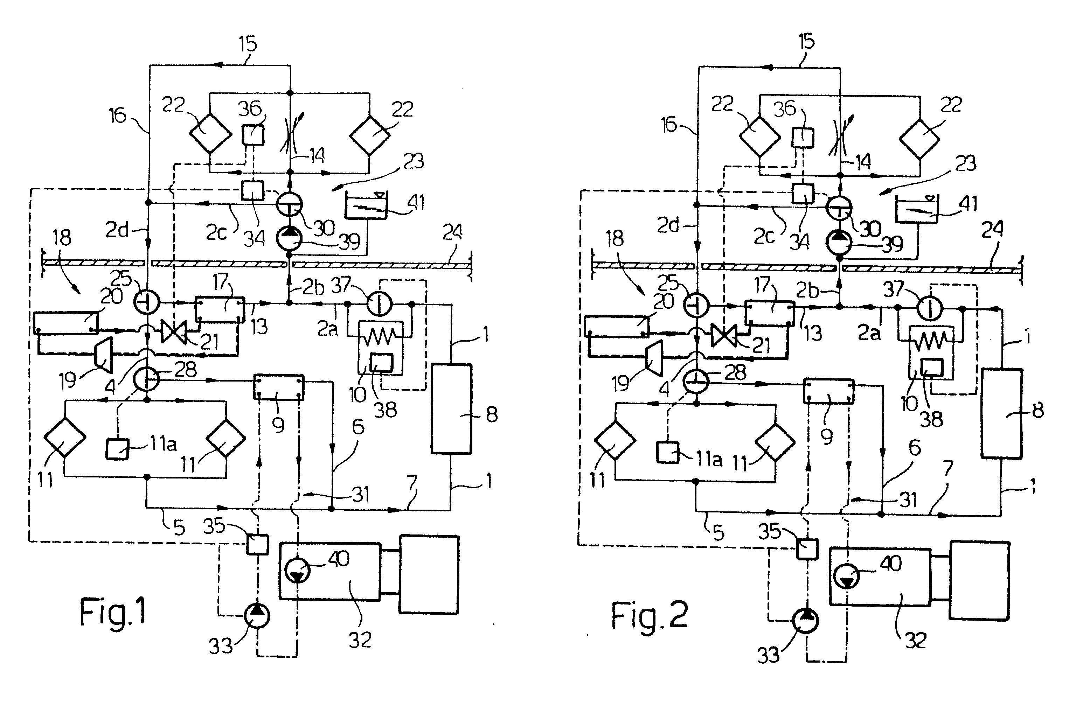

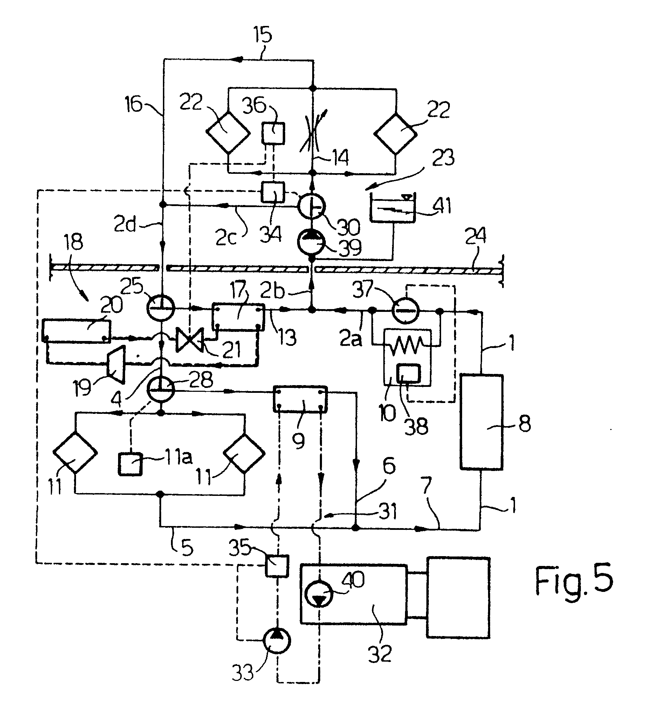

A first manually operated three-way change-over valve 25 is connected between the portion 13 of the second circuit and the portions 2d and 4 of the first circuit, and can assume a first (winter) position shown in Figures 1 to 4, in which it hydraulically connects the portion 2d to the portion 4 to form a single closed-loop circuit, while interrupting hydraulic commmunication with the portion 13. The purpose of this is to prevent dangerous overheating of the refrigerant fluid. The same valve can be switched to a second (summer) position shown in the configuration of Figure 5, in which it interrupts hydraulic communication between the portions 2d and 4 while hydraulically connecting the portion 13 to the remaining part of the second circuit to form therewith a single closed-loop circuit.

The apparatus also comprises a second three-way change-over valve 28 automatically controlled by a thermostat 11a which is operated by temperature change in the battery compartment. This valve is located at one end of the portions 5 and 6 of the first circuit. It can he switched to a first position, shown in Figures 1, 3 and 4 in which it connects both said portions to the remaining parts of the first circuit, and to a second position, shown in Figures 2 and 5 in which it connects only the portion 6 to the remaining part of the first circuit.

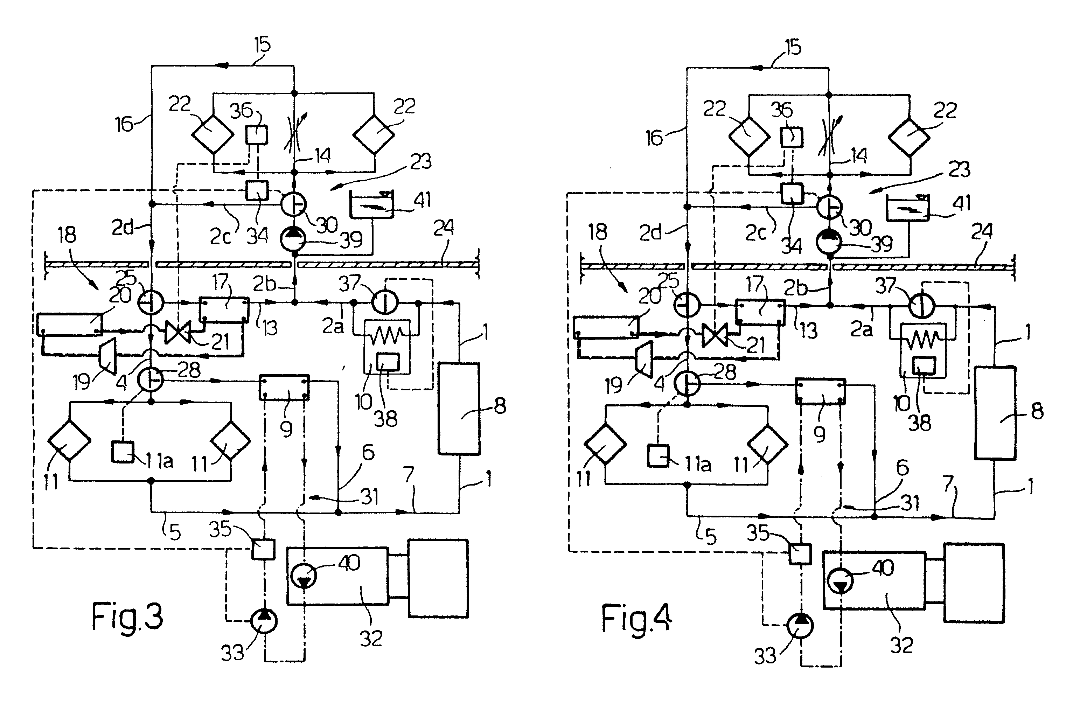

To one end of the portion 2c of the second circuit there is connected a third three-way change-over valve 30, which can be switched to a first position shown in Figures 1 and 2 in which it hydraulically connects together the portions 2b and 2c, to interrupt communication with the portion 14 and thus with the crew compartment unit heater 22, and which can he switched to a second position shown in Figures 3 and 4, in which it hydraulically connects together the portions 2b and 14 to interrupt communication with the portion 2c.

The heat exchanger 9 is connected into the cooling water circulation circuit 31 of the power unit 32. There are connected into this circuit a main pump 40 (forming part of the power unit 32) and a further electrically driven water circulation pump 33, which is controlled by a thermostat 35 and is deactivated by this latter when the cooling water temperature exceeds a predetermined value sensed by the thermostat. The thermostat 35 also feeds a signal to a central electronic unit 34, to indicate when the engine cooling water temperature has reached a predetermined value. Only when this value is reached does it feed an enabling signal to the central unit so that the valve 30 can be switched into its second said position for heating the crew compartment.

A further thermostat 36 is arranged to measure the temperature of the crew compartment 23 for controlling the three-way change-over valve 30 or the valve 21 which controls the refrigeration device 18.

The apprararatus conveniently comprises a fourth two-way valve 37 connected into the portion 2a of the first circuit and in parallel with the heat exchanger 10. It can be switched from a first open position, for when fuel heating is not required and in which hydraulic fluid can pass through it, to a second closed position shown in Figures 1 to 4 in which fluid passage is interrupted. Conveniently, this valve is controlled by the electrical signal generated by a fuel thermostat 38.

Conveniently, a further electrically driven pump 39 connected into the common portion 2b of the two circuits is arranged to circulate the heating fluid.

The operation of the described apparatus is as follows.

When the vehicle is operated under very low temperature conditions, the valves 25, 28, 30 and 37 assume the positions Shown in Figure 1. The boiler 8 is activated, and fluid can therefore circulate through the portions 1, 2a, 2b, 2c, 2d, 4, 5, 6 and 7 of the two circuits. In this manner, thermal power is transmitted to the heat exchangers 9, 10 and 11 for the engine cooling water, fuel and batteries respectively, in this first operational configuration the pump 33 of the circuit 31 being operated in order to ensure adequate heat exchange with the engine cooling water. In this configuration, the motor 32 is inoperative and therefore the main pump 40 is inactive (it being driven by this motor).

When the battery temperature has reached a predetermined value sensed by the thermostat 11a, the three-way change-over valve 28 is automatically switched to the configuration shown in Figure 2, to consequently interrupt passage of hot fluid through the portion 5 of the first circuit and thus through the battery heat exchangers 11.

When the various members of the power unit 32 located in the engine compartment have reached predetermined operating temperatures and these have merely to he maintained, the valves 28 and 30 are switched to the configurations of Figure 3, so as to restore hot fluid circulation through the portion 5 and thus through the heat exchanger 11 and, simultaneously, to pass hot fluid through the portions 14, 15, 16 of the second circuit and thus through the heat exchanger 22. In this manner, thermal energy is supplied to the crew compartment 23 in order to heat it (see Figure 4).

After the power unit 32 has operated for a certain period, the thermal energy required for maintaining the temperature of the aforesaid members can be supplied directly by this latter. The boiler 8 and the electrically driven pump 33 of the circuit 31 are therefore deactivated. The configuration of the other apparatus components, shown in Figure 4, is still the same as in the preceding Figure 3. In this configuration thermal energy is transmitted through the circuit 31 to the heat exchanger 9 and thus to the aforesaid portions of the two circuits, in order to maintain temperature.

If however the vehicle is to operate under high temperature environmental conditions, the valves 25, 28, 30 and 37 are switched to the positions shown in Figure 5. As can be seen in this figure, a closed circuit is defined comprising the portions 13, 2b, 14, 15, 16 and 2d, whereas hydraulic communication is interrupted between the portion 2d and the portion 4. Following activation of the refrigeration device 18, refrigeration power is transmitted through the heat exchanger 17 to the second said circuit and thus to the heat exchanger 22 in order to cool the vehicle crew compartment 23.

It is therefore apparent that by means of the apparatus according to the invention, thermal power or refrigeration power can be transmitted to the vehicle crew compartment 23 by using the same low-pressure inert hydraulic fluid. Again, the refrigeration device 18 can be located in the engine compartment separated from the crew compartment by the bulkhead 24, with the advantage of preventing damage to the interior of the crew compartment as a result of explosion or fire in the device Such an event could otherwise be particularly serious because freon vapour when in the presence of a naked flame generates phosgene, a gas known to be lethal. Furthermore, because of the fact that during normal vehicle running conditions the heat exchanger 9 is arranged to transmit thermal power from the engine 32 to the two hydraulic circuits, it is not necessary to provide an engine cooling circuit with parts located outside the power unit compartment, with the advantage of reducing the vulnerability of the tank during combat.

Finally, although the same circuit is used for heating and cooling the crew compartment 23, the apparatus is entirely reliable because when switched to provide only cooling for the crew compartment, the circuit portions concerned are completely separated from the other circuit branches and thus any thermal power which reaches the heat exchanger 9 by way of the circuit 31 cannot be transmitted to the other parts of the apparatus, thus preventing possible dangerous overheating of the refrigerant fluid circulating within the refrigeration device 21.

## Claims

1. An apparatus for preheating the engine (32) and air-conditioning the crew compartment (23) of a track-laying or wheeled vehicle for civil or military use, comprising:
   a first closed-loop hydraulic circuit (1, 2, 2b, 2c, 2d, 4, 5, 6, 7) for circulating a low-pressure inert hydraulic fluid, said first circuit transmissing thermal power and having connected into it a boiler (8) for heating said fluid, a first heat exchanger (9) for heating the engine cooling water, a second heat exchanger (10) for heating the engine fuel and a third heat exchanger (11) for heating the batteries, and possibly a unit heater (22) for heating the crew compartment;

a second closed-loop hydraulic circuit (13, 2b, 14, 15, 16, 2d) for circulating said hydraulic fluid, said second circuit transmissing refrigeration power and having connected into it a fourth heat exchanger (l7) cooled by a refrigeration device (18) and arranged to cool said fluid, and a fifth heat exchanger (22) arranged to transmit thermal power or refrigeration power to the crew compartment of the track-laying or wheeled vehicle;

said first and second circuits having in common two circuit portions (2b, 2d) which can be connected together by a first portion (13) of said second circuit into which said fourth heat exchanger (17) cooled by the refrigeration device (18) is connected, and by means of a second portion (2c) of said first circuit; characterised by at least a first and a second three-way change-over valve (25) and (30), which are connected into said circuits and are able to be switched from a first position in which they establish hydraulic communication within said first circuit to enable said fluid heated by said boiler to be circulated through it, and in which they interrupt hydraulic communication within said first circuit, to a second position in which said valves interrupt hydraulic communication within said first circuit and establish hydraulic communication within said second circuit to enable said fluid cooled by said refrigeration device to be circulated within it, said apparatus being able, by the manual operation of said first valve (25), and the automatic operation of said second valve (30), to be set into a first configuration in which both the valves are switched to said first positions such that hot fluid is circulated only within said first circuit in order to heat the cooling water, the fuel and the batteries, a second configuration in which said first valve (25) is switched to said first position and said second valve (30) is switched to said second position in such a manner that said hot fluid is also circulated within part of said second circuit and thus within said crew compartment, and a third configuration in which said first valve (25) and second valve (30) are both switched to said second positions so that only said cold fluid circulates within said second circuit in order to cool said crew compartment.

2. An apparatus as claimed in claim 1, characterised in that said first and third heat exchangers (9, 11) are connected in parallel into corresponding portions (6, 5) of said first circuit, and a third three-way change-over valve (28) is disposed at one end of said two portions, said third valve being able to be switched from a first position in which it connects both said portions to the remaining part of said first circuit, to a second position in which it connects to the remaining part of said first circuit only said portion (6) into which said first heat exchanger (9) is connected.

3. An apparatus as claimed in one of the preceding claims, characterised in that said first heat exchanger (9) is connected into an engine cooling water circulation circuit (13), into said circuit there being connected an electrically driven water circulation pump (33), which is automatically deactivated when the cooling water temperature exceeds a predetermined value measured by a corresponding temperature sensor (35).

4. An apparatus as claimed in one of the preceding claims, characterised in that each of said third and fourth heat exchangers (11, 22) comprises at least one unit heater.

5. An apparatus as claimed in one of the preceding claims, characterised by comprising a fourth two-way valve (37) connected into said first circuit in parallel with said second heat exchanger (10) and able to be switched from a first open position in which said fluid can pass through it, to a second position in which said passage is interrupted, said fourth valve being operated automatically as the result of a signal emitted by a corresponding thermostat (38) which senses the fuel temperature.

6. An apparatus as claimed in one of the preceding claims, characterised in that said hydraulic fluid is a mixture of ethylene glycol and water.

7. An apparatus as claimed in one of the preceding claims, characterised in that said first change-over valve (25) is manually operated, whereas said second valve (30) and third valve (28) are operated automaticaly as the result of a signal emitted by a corresponding thermostat (36, 11a) which senses the temperature in said crew compartment and in the battery housing compartment respectively.

8. An apparatus as claimed in one of the preceding claims, characterised in that at least said boiler (8), said refrigeration device (18), said cooling water circulation circuit (31) and said first, second and third heat exchangers (9, 10, 11) are disposed in the compartment which houses said engine, said compartment being separated from the crew compartment by a bulkhead (24).

## Revendications

1. Un appareil de préchauffage du moteur (32) et de climatisation de l'habitacle (23) d'un véhicule chenillé ou à roues, à usage civil ou militaire, comprenant:

     un premier circuit hydraulique en boucle fermée (1, 2, 2b, 2c, 2d, 4, 5, 6, 7) pour faire circuler un fluide hydraulique inerte à basse pression, ledit premier circuit transmettant l'énergie thermique et étant relié à une chaudière (8) pour chauffer ledit fluide, un premier échangeur de chaleur (9) pour chauffer l'eau de refroidissement du moteur, un second échangeur de chaleur (10) pour chauffer le carburant du moteur, et un troisième échangeur de chaleur (11) pour chauffer les batteries d'accumulateurs et, éventuellement, un radiateur indépendant (22) pour chauffer l'habitacle,

     un second circuit hydraulique en boucle fermée (13, 2h, 14, 15, 16, 2d) pour faire circuler ledit fluide hydraulique, ledit second circuit transportant l'énergie frigorigène et étant relié à un quatrième échangeur de chaleur (17) refroidi par un dispositif de réfrigération (18) et agencé pour refroidir ledit fluide, et un cinquième échangeur de chaleur (22) agencé pour transmettre l'énergie thermique ou l'énergie frigorigène à l'habitacle du véhicule chenillé ou sur roues, lesdits premier et second circuits comprenant, en commun, deux parties de circuit (2b, 2d) susceptibles d'être reliées mutuellement par une première partie (13) dudit second circuit auquel est raccordé ledit quatrième échangeur de chaleur (17) refroidi par le dispositif de réfrigération (18), et par l'intermédiaire d'une seconde partie (2c) dudit premier circuit, caractérisé par au moins une première et d'une seconde vanne d'inversion à trois voies (25) et (30), raccordées auxdits circuits et susceptibles d'être commutées à partir d'une première position, dans laquelle elles établissent une communication hydraulique à l'intérieur dudit premier circuit, pour permettre audit fluide, chauffé par ladite chaudière, de circuler au travers et, dans lequel elles interrompent la communication hydraulique dans ledit premier circuit, jusqu'à une seconde position dans laquelle lesdites vannes interrompent la communication hydraulique à l'intérieur dudit circuit et établissent une communication hydraulique dans ledit second circuit pour permettre la circulation dudit fluide refroidi par ledit dispositif de réfrigération à l'intérieur de celui-ci, ledit dispositif étant susceptible, par la manoeuvre manuelle de ladite première vanne (25) et le fonctionnement automatique de ladite seconde vanne (30) d'être réglé dans une première configuration, dans laquelle les deux vannes sont commutées dans lesdites premières positions, de manière que le fluide chauffé ne circule que dans ledit premier circuit, pour chauffer l'eau de refroidissement, le carburant et les batteries d'accumulateurs, dans une seconde configuration dans laquelle ladite première vanne (25) est commutée vers ladite première position et ladite seconde vanne (30) est commutée vers ladite seconde position, de manière que ledit fluide chauffé circule également dans la partie dudit second circuit et, par suite, dans ledit habitacle, et dans une troisième configuration dans laquelle lesdites première vanne (25) et seconde vannes (30) sont toutes deux commutées dans lesdites secondes positions, de manière que seul le fluide froid circule dans ledit second circuit pour réfrigérer ledit habitacle.

2. Un appareil selon la revendication 1, caractérisé en ce que lesdits premier et troisième échangeurs de chaleur (9, 11) sont montés en parallèle dans les parties correspondantes (6, 5) dudit premier circuit, et qu'une troisième vanne d'inversion à trois voies (28) est disposée à une extrémité desdites deux parties, ladite troisième vanne étant susceptible d'être commutée, à partir d'une première position dans laquelle elle relie lesdites deux parties à la partie restante dudit premier circuit, jusque dans une seconde position dans laquelle elle ne relie à la partie restante dudit premier circuit que ladite partie (6) à laquelle ledit premier échangeur de chaleur (9) est raccordé.

3. Un appareil selon l'une des précédentes revendications, caractérisé en ce que ledit premier échangeur de chaleur (9) est relié à un circuit de circulation d'eau de refroidissement du moteur (13), circuit dans lequel est monté une pompe de circulation d'eau entraînée électriquement (33) qui est mise automatiquement hors circuit lorsque la température de l'eau de refroidissement dépasse une valeur prédéterminée, mesurée par un capteur de température correspondant (35).

4. Un appareil selon l'une des précédentes revendications, caractérisé en ce que chacun desdits troisième et quatrième échangeur de chaleur (11, 22) comprend au moins un radiateur indépendant.

5. Un appareil selon l'une des précédentes revendications, caractérisé en ce qu'il comprend une quatrième vanne à deux voies (37) montée dans ledit circuit en parallèle avec ledit second échangeur de chaleur (10) et susceptible d'être commutée à partir d'une première position ouverte, dans laquelle ledit fluide peut passer au travers, jusqu'à une seconde position dans laquelle ledit passage est interrompu, ladite quatrième vanne étant commandée automatiquement en réponse à un signal émis par un thermostat correspondant (38) qui capte la température du carburant.

6. Un appareil selon l'une des précédentes revendications, caractérisé en ce que ledit fluide hydraulique est un mélange de glycol éthylène et d'eau.

7. Un appareil selon l'une des précédentes revendications, caractérisé en ce que ladite première vanne d'inversion (25) est à commande manuelle, tandis que lesdites secondes (30) et troisième vannes(28) sont commandées automatiquement en réponse à un signal émis par un thermostat correspondant (36, 11a) qui capte la température, respectivement, dans ledit ha bitacle et dans le compartiment qui abrite les batteries d'accumulateurs.

8. Un appareil selon l'une des précédentes revendications, caractérisé en ce qu'au moins ladite chaudière (8), ledit dispositif de réfrigération (18), ledit circuit de circulation d'eau de refroidissement (31) et lesdits premier, second et troisième échangeurs de chaleur (9, 10, 11) sont disposés dans le compartiment recevant ledit moteur, ledit compartiment étant séparé de l'habitacle par une cloison (24).

**Ansprüche**

1. Eine Einrichtung für das Vorheizen des Antriebsaggregats (32) und Klimatisierung der Mannschaftskabine (23) eines Ketten- oder Radfahrzeugs für zivilen oder militärischen Einsatz, umfassend:

einen ersten in sich geschlossenen Hydraulikkreislauf (1, 2a, 2b, 2c, 2d, 4, 5, 6, 7) für das Zirkulieren eines inerten hydraulischen Nieder-druckfluids, welcher erste Kreislauf thermische Leistung überträgt und in den ein Kocher (8) für das Aufheizen des Fluids, ein erster Wärmetauscher (9) für das Aufheizen des Antriebsaggregat-Kühlwassers, ein zweiter Wärmetauscher (10) für das Aufheizen des Antriebsbrennstoffs und ein dritter Wärmetauscher (11) für das Aufheizen der Batterien eingefügt sind, und, gegebenenfalls, ein Kabinenheizer (22) für das Heizen der Besatzungskabine;

ein zweiter in sich geschlossener Hydraulikkreislauf (13, 2h, 14, 15, 16, 2d) für das Zirkulieren des Hydraulikfluids, welcher zweite Kreislauf Kühlleistung überträgt und in den ein vierter Wärmetauscher (17), gekühlt durch eine Kühleinrichtung (18) und ausgebildet zum Kühlen des Fluids, sowie ein fünfter Wärmetauscher (22), ausgebildet zum Übertragen thermischer Leistung oder Kühlleistung auf die Besatzungskabine des Ketten- oder Radfahrzeugs eingefügt sind;

wobei der erste Kreislauf und der zweite Kreislauf zwei Kreislaufabschnitte (2h, 2d) gemeinsam haben, die miteinander verbunden werden können durch einen ersten Abschnitt (13) des zweiten Kreislaufs, in welchen der vierte Wärmetauscher (17), gekühlt von der Kühleinrichtung (18), eingefügt ist, sowie mittels eines zweiten Abschnitts (2c) des ersten Kreislaufs; gekennzeichnet durch zumindest ein erstes und ein zweites Dreiwegeumschaltventil (25) und (30), die in die Kreisläufe eingefügt sind und umschaltbar sind von einer ersten Position, in der sie die hydraulische Kommunikation innerhalb des ersten Kreislaufs herstellen zum Ermöglichen der Zirkulation des von dem Kocher aufgeheizten Fluids und in der sie die hydraulische Kommunikation innerhalb des ersten Kreislaufs unterbrechen, in eine zweite Position, in der die Ventile die hydraulische Kommunikation innerhalb des ersten Kreislaufs unterbrechen und die hydraulische Kommunikation innerhalb des zweiten Kreislaufs herstellen zum Ermöglichen der Zirkulation des von der Kühleinrichtung gekühlten Fluids in ihm, welche Einrichtung durch manuelle Betätigung des ersten Ventils (25) und automatische Betätigung des zweiten Ventils (30) in eine erste Konfiguration bringbar ist, in der beide Ventile in die ersten Positionen geschaltet sind, derart, daß heißes Fluid nur innerhalb des ersten Kreislaufs zirkuliert zwecks Aufheizung des Kühlwassers des Brennstoffs und der Batterien, eine zweite Konfiguration, in der das erste Ventil (25) in die erste Position und das zweite Ventil (30) in die zweite Position geschaltet sind, derart, daß das heiße Fluid auch innerhalb des Teils des zweiten Kreislaufs zirkuliert und demgemäß innerhalb der Besatzungskabine, sowie eine dritte Konfiguration, in der das erste Ventil (25) und das zweite Ventil (30) beide in die zweite Position geschaltet sind, so daß nur das kalte Fluid innerhalb des zweiten Kreislaufs zirkuliert zwecks Kühlung der Besatzungskabine.

2. Eine Einrichtung nach Anspruch 1, dadurch gekennzeichnet, daß der erste und dritte Wärmetauscher (9, 11) parallel geschaltet sind in entsprechende Abschnitte (6, 5) des ersten Kreislaufs und daß ein drittes Dreiwegeumschaltventil (28) an einem Ende dieser beiden Abschnitte angeordnet ist welches dritte Ventil umschaltbar ist aus einer ersten Position, in der es beide Abschnitte an den verbleibenden Teil des ersten Kreislaufs anschließt, in eine zweite Position, in der es den verbleibenden Teil des ersten Kreislaufs nur mit dem Abschnitt (6) verbindet, in den der erste Wärmetauscher (9) eingefügt ist.

3. Eine Einrichtung nach einem der vorangehenden Ansprüche, dadurch gekennzeichnet, daß der erste Wärmetauscher (9) in einem Antriebsaggregat-Kühlwasserkreislauf (13) eingefügt ist, in welchen eine elektrisch angetriebene Wasserumlaufpumpe (33) eingeschaltet ist, die automatisch deaktiviert wird, wenn die Kühlwassertemperatur einen vorbestimmten, mittels eines entsprechenden Temperatursensors (35) gemessenen Wert übersteigt.

4. Eine Einrichtung nach einem der vorangehenden Ansprüche, dadurch gekennzeichnet, daß jeder der dritten und vierten Wärmetauscher mindestens einen Heizer umfaßt.

5. Eine Einrichtung nach einem der vorangehenden Ansprüche, gekennzeichnet durch ein viertes Zweiwegeventil (37), eingefügt in den ersten Kreislauf parallel zu dem zweiten Wärmetauscher (10) und umschaltbar aus einer ersten offenen Position, in der das Fluid hindurchströmen kann, in eine zweite Position, in der der Strömungspfad unterbrochen ist, welches viertes Ventil automatisch betätigt wird im Ergebnis eines Signals, ausgegeben von einem entsprechenden Thermostat (38), der die Brennstofftemperatur erfaßt.

6. Eine Einrichtung nach einem der vorangehenden Ansprüche, dadurch gekennzeichnet, daß das Hydraulikfluid ein Gemisch aus Äthylenglykol und Wasser ist.

7. Eine Einrichtung nach einem der vorangehenden Ansprüche, dadurch gekennzeichnet, daß das erste Umschaltventil (25) manuell betätigbar ist, während das zweite Ventil (30) und das dritte Ventil (28) automatisch betätigt werden im Ergebnis eines Signals, ausgegeben von einem zugeordneten Thermostat (36, 11a), der die Temperatur in der Besatzungskabine bzw. in dem Batteriefach erfaßt.

8. Eine Einrichtung nach einem der vorangehenden Ansprüche, dadurch gekennzeichnet, daß zumindest der Kocher (8), die Kühleinrichtung (18), der Kühlwasserkreislauf (31) und der erste, der zweite und der dritte Wärmetauscher (9, 10, 11) in dem das Antriebsaggregat aufnehmenden Gehäuse untergebracht sind, das durch eine Trennwand (24) von der Besatzungskabine getrennt ist.

Fig.2

Fig.1

EP 0 226 873 B1

Fig.4

Fig.3

10

Fig.5

EP 0 226 873 B1